# EUROPEAN PATENT APPLICATION

(11) **EP 1 000 846 A2**
(43) Date of publication of application: **17.05.2000**
(21) Application number: 99308942.4
(22) Date of filing: 10.11.1999
(51) Int. Cl.: B62K 21/02

(54) **Vehicle steering assembly**

(30) Priority: 10.11.1998 GB 9824650
(71) Applicant: Tryphonos, Michael, London N4 1EE (GB)
(72) Inventor: Tryphonos, Michael, London N4 1EE (GB)
(74) Representative: Foster, Mark Charles

(57) **Abstract**

A steering assembly for a motorcycle comprises a hub 31 mechanically connected to the steering mechanism of the motorcycle for changing the direction of a wheel 1 rotatably coupled to the hub 31. A wishbone 9 is coupled to a main body portion 5 of the motorcycle, and two arms 11, 13 of the wishbone 9 extend either side of the wheel 1. A member 55 passes through the hub 31 and is rigidly coupled 56 to each of the arms 11, 13 of the wishbone 9. A sleeve 35 mounted around the member 55 allows relative rotation therebetween. The sleeve 35 is pivotably coupled to the hub 31 so as to provide for changing the direction of the wheel 1. A link 27 extends from the sleeve 35 and connects to a main body portion 5 of the motorcycle. The rigid coupling of the member 55 to the arms 11, 13 of the wishbone improves torsional rigidity. Another aspect of the invention relates to a steering assembly that allows the axis Y2 of rotation of the wheel 1 for steering and the axis Y1 of rotation of the handle bars 7 to be different. A further aspect of the present invention relates to the alignment of the attachment points of steering linkages 19, 27 and the axis x2 of rotation of the wheel 1 when in the straight ahead position. A yet further aspect of the invention relates to providing for variation in length of at least one of the steering assembly linkages 19, 27. An additional aspect of the present invention relates to the provision of an outer hub 29 mounted around the first-mentioned hub 31 for rotation relative to the outer hub 29 being attached to or integral with the wheel 1 of the vehicle. In this aspect, an aperture 63 is provided in the outer hub 29 to allow adjustment of and/or access to the pivotal coupling between the first mentioned hub and the sleeve 35.

## Description

The present invention relates to a steering assembly for a vehicle, and more particularly, but not exclusively, to an improved steering assembly for a motorcycle.

Hitherto, nearly all commercially available motorcycles have been steered using a telescopic fork. This arrangement also provides front wheel suspension. Whilst this design has a simple structure, it has many disadvantages. Each side of the fork comprises a pair of tubes, one of which slides within the other. These tubes suffer from stiction and binding, especially when subjected to lateral loading, which reduces the effectiveness of the suspension. Also, due to the angle that the telescopic fork has to be set at, this tends to produce dive during front wheel braking, reducing the amount of suspension travel available (a particular problem when braking hard over uneven surfaces). It has also been found that on high performance motorcycles that the tubes comprising the telescopic fork must be made of a fairly large diameter in order to resist flexing. However, this increases the frictional area between the sliding surfaces of the tubes, resulting in greater friction, and also increases the mass of the system. It is undesirable to increase the mass around the steering axis. Further, during front wheel braking, because of the length of the telescopic fork, the fork can apply a large leverage force on the steering bearings as well as the frame of the motorcycle. In order to withstand such force, the frame of the motorcycle must be strong and inevitably heavy. The force also tends to cause excessive wear to the steering bearings.

Many alternatives to the telescopic fork have been proposed, but none have been so universally accepted as the telescopic fork. Many of the designs have failed because they provide inferior performance to the conventional telescopic fork. Commonly, prior proposals have tended to be over-complicated, which not only makes them costly to manufacture and maintain, but also prevents the rider from receiving satisfactory handling feedback from the motorcycle. Previous systems have been criticised for their vague handling, which causes the rider to have little faith in the steering systems.

Examples of such prior art alternatives to the conventional telescopic fork are disclosed in British patent number 1274441 and European patent number 0 432 107.

According to a first aspect of the present invention, there is provided a steering assembly for a vehicle, the assembly comprising a hub mechanically connected to the steering mechanism of the vehicle for changing the direction of a wheel rotatably coupled to the hub; wishbone means coupled to a main body portion of the vehicle, the two arms of which extend either side of the wheel; a member which passes through the hub and which is rigidly coupled to each of the arms of the wishbone means; a sleeve mounted around the member for allowing relative rotation therebetween, the sleeve being pivotally coupled to the hub so as to provide for changing the direction of the wheel; and a link extending from the sleeve and connected to a main body portion of the vehicle.

By providing a member which rigidly couples each of the arms of the wishbone means, the torsional rigidity at the wishbone means may be increased.

A further, outer hub is preferably mounted around the aforesaid hub by, for example, wheel bearings, in order to allow relative rotation between the hubs. The further hub may be attached to or integral with the wheel. An aperture is advantageously provided in the further hub to allow adjustment of and/or access to the pivotal coupling between the inner hub and the sleeve. This may allow the pivotal coupling to be serviced without dismantling the steering assembly.

The pivotal coupling between the hub and the sleeve may comprise taper roller bearing means secured between the hub and the sleeve.

The pivotal coupling between the hub and the sleeve may be located relative to the hub by a pin, for example. This arrangement may conveniently facilitate removal or adjustment of the pivotal coupling using the aperture in the further, outer hub.

Removal of the pin through the aperture may allow the sleeve to be withdrawn from the hub.

The sleeve may be mounted around the member coupled to the arms of the wishbone means by needle roller bearing means.

The sleeve preferably includes an extension part extending therefrom to which the link is connected at one end, the other end of the link being connected to a main body portion of the vehicle.

The orientation of this extension part of the sleeve conveniently sets the steering axis angle of the wheel of the vehicle.

The length of the link may be adjusted so as to change the orientation of the extension part in order to set the steering axis angle of the wheel of the vehicle. This feature may allow the geometry of the steering to be adjusted so that the desired handling characteristics can be obtained.

The inner hub may be provided with an extension part and a further, steering link may be connected between this extension part and the steering mechanism of the vehicle.

Preferably, this further, steering link is substantially the same length as the aforementioned link. With this arrangement, bump steer may be minimised.

Means may be provided for adjusting the length of the further, steering link. This allows greater flexibility in changing the geometry of the steering, and allows the respective links to be maintained at the same length.

According to a second aspect of the present invention, there is provided a steering assembly for a vehicle, the assembly comprising handlebars attached to a steering column; a first lever extending from the steering column; a hub for changing the direction of a wheel rotatably coupled to the hub; a second lever extending from the hub; and a link mechanically connecting the first and second levers; the arrangement being such that steering inputs from the handlebars are translated into direction changes of the wheel.

This steering assembly is relatively simple, and has fairly few moving parts. This may give good feedback to the rider.

The steering axis rotation of the wheel and the steering axis of rotation of the handlebars may be different. These axes may not be parallel.

According to a third aspect of the present invention, there is provided a steering assembly for a vehicle, the assembly comprising a hub mechanically connected by means of a first linkage to the steering mechanism of the vehicle for changing the direction of a wheel rotatably coupled to the hub; and a member pivotally coupled to the hub so as to provide for changing the direction of the wheel, the member being connected by means of a second linkage to a main body portion of the vehicle; wherein an imaginary line connecting at least one attachment point of the first linkage and at least one attachment point of said second linkage lies substantially parallel to the axis of rotation of the wheel when in the straight ahead position.

This arrangement may minimise or reduce bump steer.

According to a fourth aspect of the present invention, there is provided a steering assembly for a vehicle, the assembly comprising a hub mechanically connected by means of a first linkage to the steering mechanism of the vehicle for changing the direction of a wheel rotatably coupled to the hub; and a member pivotally coupled to the hub so as to provide for changing the direction of the wheel, the member being connected by means of a second linkage to a main body portion of the vehicle; wherein the length of at least one of the first and second linkages is/are adjustable.

According to a fifth aspect of the present invention, there is provided a steering assembly for a vehicle, the assembly comprising an inner hub mechanically connected to the steering mechanism of the vehicle; a member pivotally coupled to the inner hub so as to provide for changing the direction of the wheel, the member being connected to a main body portion of the vehicle; and an outer hub mounted around said inner hub for rotation relative thereto, the outer hub being attached to or integral with a wheel of the vehicle, and having an aperture therein to allow adjustment of and/or access to the pivotal coupling between the inner hub and the member.

The present invention also provides a motorcycle including a steering assembly including any of the features discussed above.

For a better understanding of the present invention, an embodiment will now be described by way of example, with reference to the accompanying drawings, in which:
Figure 1 shows a motorcycle having a steering assembly in accordance with the present invention;
Figure 2 is a perspective view showing the connection between the front wheel of the motorcycle and the handlebars;
Figure 3 is a side plan view of the front wheel of the motorcycle and the connection between the front wheel and the handlebars;
Figure 4 is a perspective view showing the connection between the front wheel of the motorcycle and the main body part of the motorcycle;
Figure 5 is a side plan view showing the connection between the front wheel of the motorcycle and the main body portion of the motorcycle;
Figure 6 is a cross-sectional view taking along line A-A shown in Figure 1;
Figure 7 shows a perspective detailed view of the hub assembly;
Figure 8 shows an exploded view of the hub assembly of Figure 7;
Figure 9 shows a cross-sectional view of a spherical rod end used in the steering assembly; and
Figure 10 is a schematic overhead plan view of a motorcycle with the front wheel and handlebars in the straight ahead position.

Throughout the drawings, like referencing rules are used to designate similar elements appearing in different drawings.

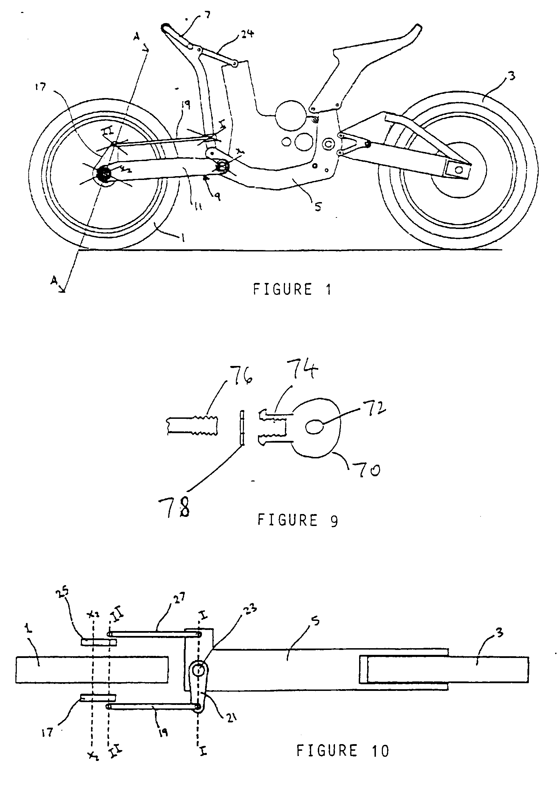

Figure 1 shows a motorcycle including a front wheel 1 and rear wheel 3, both of which are attached to a main body part or frame 5. The front wheel 1 is steered by turning the handlebars 7. With the exception of the front wheel steering wheel mechanism described below, the motorcycle may otherwise be conventional. However, it should be noted that the frame 5 may be made less substantial (and hence lighter) than would be possible conventionally due to the advantages of the new steering mechanism.

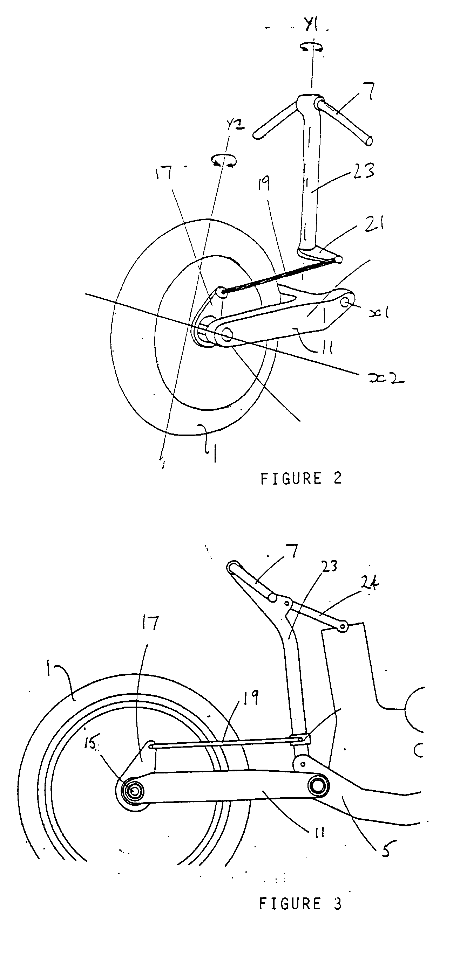

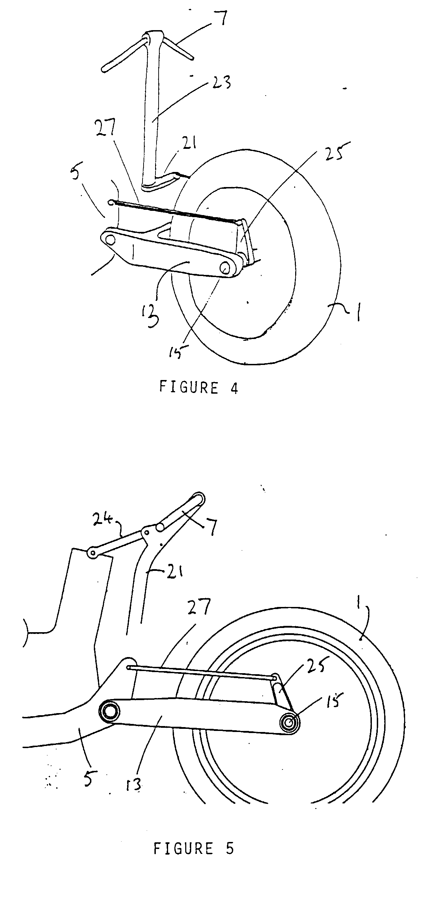

Referring now to Figures 1 to 5, it can be seen that the front wheel 1 is attached to the frame 5 of the motorcycle by means of a swinging arm or wishbone 9. The wishbone 9 is pivotally attached to the frame 9, and moves around axis x1. Damping means (not shown) may be provided between the frame 5 and the wishbone 9 to control relative movement therebetween. The wishbone comprises first and second arms 11 and 13. At the end of the arms 11 and 13 furthest from the frame 5 of the motorcycle, these arms are attached to the hub assembly 15 of the front wheel 1. The hub assembly 15 will be described in greater detail below.

On the same side of the front wheel 1 as the first arm 11 of the wishbone 9, a first lever 17 extends from the hub assembly 15. At the end of the first lever 17 furthest from the hub assembly, a steering linkage 19 connects the first lever 17 to a lever 21 attached to the steering column 23 of the motorcycle. The steering column 23 is rotated about axis y1 by using the handlebars 7. The steering column 23 rotates about articulated joints to the frame 5 and to column bracket 24. The steering linkage 19 is connected to the end of the lever 21 furthest from the axis y1. The connection between the steering column 23 and the front wheel 1 is such that the wheel 1 can be steered.

On the same side of the front wheel 1 as the second arm 13 of the wishbone 9 a second lever 25 forms part of the hub assembly 15. At the end of the second lever 25 furthest from the hub assembly 15, the lever 25 is coupled to a second linkage 27. The linkage 27 connects the second lever 25 to the frame 5 of the motorcycle. The orientation of the second lever 25 determines the steering axis y2. The linkage 27 controls rotation of the lever 25 (and hence the angle of steering axis y2). The linkage maintains the desired steering axis y2 during the suspension movements of the wishbone 9 about axis x1.

The orientation of the second lever 25 can be adjusted by altering the length of the second linkage 27. A method of providing alteration to the length of the linkage 27 would be well known to those skilled in the art. For example, the connection between the second linkage 27 and the second lever 25 may be by means of a spherical rod end 70 (Figure 9). A pin (not shown) extending from the second lever 25 passes through the aperture 72 in the rod end 70. The rod end includes an internally threaded part 74 which receives a threaded part 76 of the second linkage 27. The effective length of the second linkage 27 can be adjusted by setting the amount of the treaded part 76 of the second linkage 27 that is received in the threaded part 74 of the rod end 70. A locknut 78 locks the linkage 27 to the rod end 70.

Similarly, the orientation of the first lever 17 for a given steering input is set by the length of the steering linkage 19. Obviously, the orientation of the first lever 17 will change when the wheel 1 is steered. The effective length of the steering linkage 19 may be set also using a spherical rod end.

It has been found that bump steer is minimised when the steering linkage 19 and the second linkage 27 are of substantially equal effective length and the points of connection of the linkages to the levers 17 and 25, and to the frame 5 and steering lever 21 (when the front wheel 1 and handlebars 7 are pointing straight ahead) are mirrored about any plane which lies parallel to both axes y1 and y2. This arrangement is shown in Figures 1 and 10 (Figure 10 is a schematic overhead plan view of a motorcycle with the front wheel 1 and handlebars in the straight ahead position). The point of connection of linkage 19 to the steering lever 21 is aligned with the point of connection of linkage 27 to the frame 5 (see line I). The point of connection of the linkage 19 to the lever 17 is aligned with the point of connection of linkage 27 to lever 25 (see line II). The central axis of the point of connection of the lever 17 to the inner hub 31 is aligned with the central axis of the point of connection of the lever 25 to the sleeve 35 (both these axes corresponding to axis x2 when the wheel 1 is pointing straight ahead).

In other words, bump steer can be minimised by the positioning of the linkage connection points. When the front wheel 1 and the handlebars 7 are pointing straight ahead, the position of these connecting points can be described in the following way:
An imaginary line I passing through points of connection of the linkage 27 with the frame 5 and the linkage 19 with the lever 21 is parallel to an imaginary line II passing through points of connection of the linkage 27 with the lever 25 and the linkage 19 with the lever 17. These lines I and II are also parallel to axes x1 and x2. Also the linkages are parallel to the plane of the front wheel 1 when it is pointing straight ahead.

Such an arrangement dictates that the linkages have the same length.

For this reason, steering linkage 19 is also made adjusable in length so that the steering linkage 19 can be made the same length as the second linkage 27 when the length of the second linkage 27 is adjusted. The length of the second linkage determines, as explained above, the angle of the steering axis y2 of the motorcycle, and this effects the stability of the motorcycle. Therefore, providing for variation of the lengths of linkages 19 and 27 allows the handling characteristics of the motorcycle to be optimised whilst minimising a bump steer.

It should be noted that bump steer does not occur with conventional motorcycles having telescopic forks.

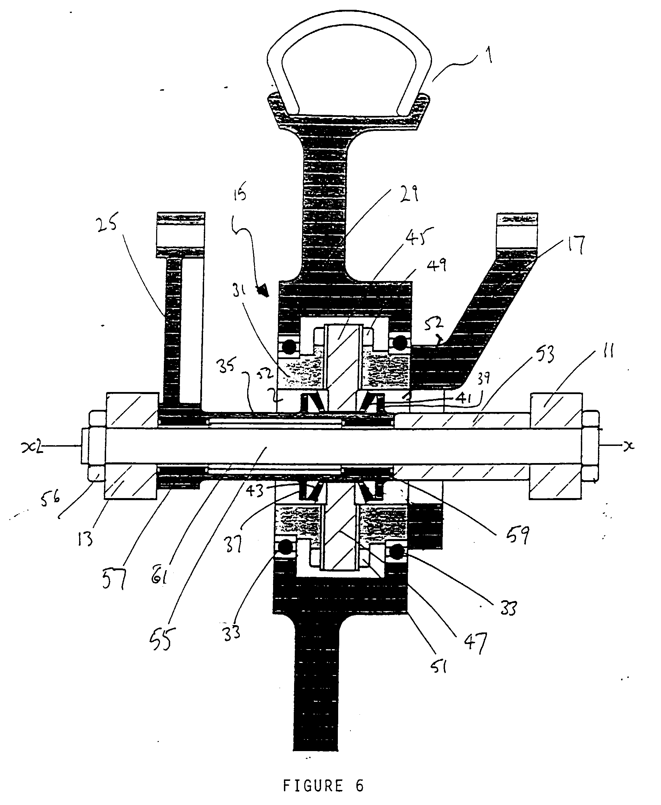

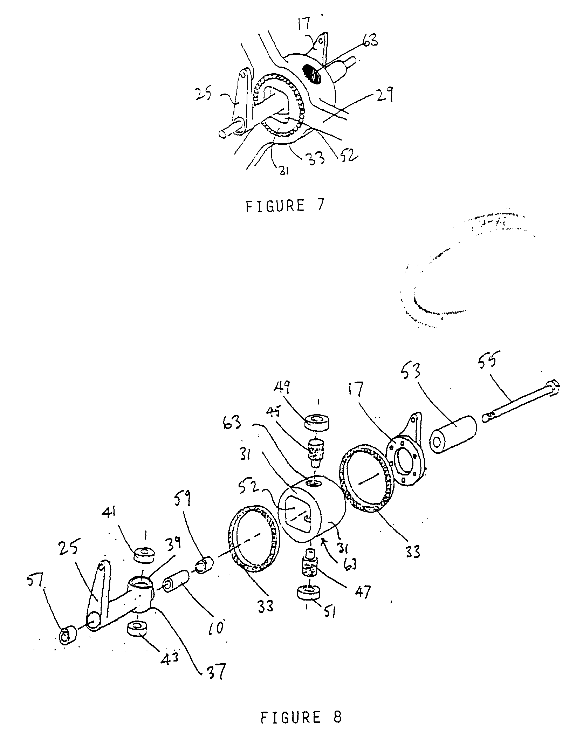

The hub assembly 15 will now be described in more detail with reference to Figures 6, 7 and 8. The hub assembly 15 comprises an outer hub 29 which can be either attached to the spokes of the front wheel 1 or can be formed integrally therewith. The outer hub 29 surrounds inner, non-rotating hub 31. Wheel bearings 33 provide for rotation of the outer hub 29 relative to the inner hub 31. Both the inner and outer hubs 29 and 31 pivot about steering axis y2 in response to steering input from the steering column 23. The pivoting movement about the steering axis y2 is provided by first lever 17 which is rigidly connected to the inner hub 31. The second lever 25 is, as described above, attached to the frame 5 of the motorcycle by second linkage 27. Second lever 25 does not move in response to steering input from the steering column 23. A sleeve 35 extends from the second lever 25 to the central region of the inner hub 31. Sleeve 35 is hollow and includes two opposed spaced apart circular outwardly disposed flanges 37 and 39. The spaced apart flanges 37 and 39 accommodate two opposing taper roller bearings 41 and 43. These taper roller bearings 41 and 43 are coupled to the inner hub 31 by two adjuster pins 45 and 47. The two adjuster pins 45 and 47 have a screw thread which cooperates with a screw thread of the inner hub 31, which allows the adjuster pins 45 and 47 to be fixed in position with respect to the inner hub 31. The adjuster pins 45 and 47, as well as locating the taper roller bearings 41 and 43, and hence the second lever 25 (by means of the sleeve 35 and flanges 37 and 39), allow for the correct pre-loading of the taper roller bearings 41 and 43. The adjuster pins 45 and 47 are locked into position after adjustment by locknuts 49 and 51.

This arrangement allows for steering torque to be transmitted from the handlebars 7 about the axis y1 through linkage 19 to the inner hub 31, outer hub 29 and wheel 1, which will simultaneously rotate about steering axis y2. To allow this rotation about the axis y2 an enlarged opening 52 is provided in the sides of the inner hub 31.

A spacer 53 is provided between the end of the sleeve 35 furthest from the second lever 25 and the inner side of the first arm 11 of the wishbone 9. The second arm 13 of the wishbone 9 abuts the side of the second lever 25 furthest from the taper roller bearings 41 and 43. A bolt 55 passes through the lever 25, sleeve 35, inner hub 31, outer hub 29, first lever 17, spacer 53, and the first 11 and second 13 arms of the wishbone 9. A nut 56 has a thread which cooperates with a thread of the bolt 55 for rigidly connecting the first arm 11 to the second arm 13 of the wishbone 9.

Although the second lever and the wishbone 9 are both coupled to the frame 5 of the motorcycle there will be some rotation of the lever 25 around the central axis x2 of the bolt 55 due to suspension movement. This rotation is provided for by needle roller bearings 57 and 59 mounted between the sleeve 35 and the bolt 55. A spacer 61 separates the respective needle roller bearings 57 and 59.

The bolt provides the wishbone 9 with greater torsional rigidity.

For ease of servicing, the outer hub 29 is provided with apertures 63. Through the apertures 63 access can be gained to the locknuts 49 and 51 and the adjuster pins 45 and 47. This is highly advantageous because the steering bearings of motorcycles require relatively frequent attention.

To adjust the bearings 41 and 43, the locknuts 49 and 51 are loosened or removed through the apertures 63. The adjuster pins 45 and 47 are then screwed in or out by the required amount, and the locknuts 49 and 51 are then tightened/replaced. As the bearings 41 and 43 undergo normal wear, the adjuster pins should be tightened. The apertures 63 allow the correct loading of the bearings 41 and 43 without requiring any disassembly of the steering assembly. In prior art systems, bearings have been overtightened when new with hope that, when the bearings wear, they will have the correct loading.

To replace the bearings 41 and 43, the locknuts 49 and 51, and the pins 45 and 47 are removed through the apertures 63. This allows the sleeve 35 to be withdrawn from the inner and outer hubs 31 and 29. The bearings 41 and 43 can then be replaced. No disassembling of the inner hub 31 from the outer hub 29 is required.

In the embodiment described, the point of attachment x1 of the wishbone 9 to the frame 5 of the motorcycle is approximately the same distance from the ground as the central axis x2 of the hub assembly 15 in normal use. This arrangement allows braking forces to be absorbed far more effectively than in a conventional telescopic fork arrangement. Therefore, the frame 5 of the motorcycle having a steering assembly as hereinbefore described can be made less strong, and therefore lighter, thereby reducing fuel consumption and improving handling. In the embodiment described the linkage between the handlebars 7 and the wheel 1 is relatively simple for this type of device, and this gives good feedback to the rider.

## Claims

1. A steering assembly for a vehicle, the assembly comprising:
a hub (31) mechanically connected to the steering mechanism of the vehicle for changing the direction of a wheel (1) rotatably coupled to the hub (31);
wishbone means (9) coupled to a main body portion (5) of the vehicle, the two arms (11, 13) of which extend either side of the wheel (1);
a member (55) which passes through the hub (31) and which is rigidly coupled (56) to each of the arms (11, 13) of the wishbone means (9);
a sleeve (35) mounted around the member (55) for allowing relative rotation therebetween, the sleeve (35) being pivotally coupled to the hub (31) so as to provide for changing the direction of the wheel (1); and
a link (27) extending from the sleeve (35) and connected to a main body portion (5) of the vehicle.

2. A steering assembly according to claim 1, wherein a further, outer hub (29) is mounted around said hub (31) for rotation relative thereto, the further hub (29) being attached to or integral with the wheel (1), and having an aperture (63) therein to allow adjustment of and/or access to the pivotal coupling between the hub (15) and the sleeve (35).

3. A steering assembly according to claim 1 or 2, wherein the pivotal coupling between the hub (31) and the sleeve (35) comprises taper roller bearing means (41, 43) secured between the hub (31) and the sleeve (35).

4. A steering assembly according to claim 2 or 3, wherein the pivotal coupling between the hub (31) and the sleeve (35) is located relative to the hub by a pin (45, 47), the arrangement being such that removal or adjustment of the pivotal coupling is facilitated by the aperture (63) in the further hub (29).

5. A steering assembly according to claim 4, wherein removal of the pin (45, 47) through the aperture (63) allows the sleeve (35) to be withdrawn from the hub (31).

6. A steering assembly according to claim 1, 2, 3, 4 or 5, wherein the sleeve (35) is mounted around the member (55) by needle roller bearing means (57, 59).

7. A steering assembly according to claim 1, 2, 3, 4, 5 or 6, wherein the sleeve (35) includes an extension part (25) extending therefrom to which the link (27) is connected.

8. A steering assembly according to claim 7, wherein the arrangement is such that the orientation of the extension part (25) sets the steering axis angle of the wheel (1) of the vehicle.

9. A steering assembly according to claim 8, wherein means (70-78) is provided for adjusting the length of the link (27) so as to change the orientation of the extension part (25) in order to set the steering axis angle of the wheel (1) of the vehicle.

10. A steering assembly according to any one of the preceding claims, wherein the hub (31) is provided with an extension part (17) and a further, steering link (19) is connected between the extension part (17) and the steering mechanism (7, 21, 23) of the vehicle.

11. A steering assembly according to claim 10, wherein an imaginary line (I) connecting at least one attachment point of said further link (19) and at least one attachment point of said link (27) lies substantially parallel to an axis (X2) of rotation of the wheel (1) when in the straight ahead position.

12. A steering assembly according to claim 10 or 11, wherein said further link (19) is substantially the same length as said link (27).

13. A steering assembly according to claim 10, 11 or 12, wherein means (70-78) is provided for adjusting the length of said further link (19).

14. A steering assembly for a vehicle, the assembly comprising:
handlebars (7) attached to a steering column (23);
a first lever (21) extending from the steering column (23);
a hub (31) for changing the direction of a wheel (1) rotatably coupled to the hub (31);
a second lever (17) extending from the hub; and
a link (19) mechanically connecting the first (21) and second (17) levers;
the arrangement being such that steering inputs from the handlebars (7) are translated into direction changes of the wheel (1).

15. A steering assembly according to claim 14, wherein the arrangement is such that the axis (Y2) of rotation of the wheel (1) for steering and the axis (Y1) of rotation of the handlebars (7) are different.

16. A steering assembly according to claim 15, wherein said axes (Y1, Y2) are not parallel.

17. A steering assembly for a vehicle, the assembly comprising:
a hub (31) mechanically connected by means of a first linkage (19) to the steering mechanism (7, 21, 23) of the vehicle for changing the direction of a wheel (1) rotatably coupled to the hub (15); and
a member (25) pivotally coupled to the hub (31) so as to provide for changing the direction of the wheel (1), the member (25) being connected by means of a second linkage (27) to a main body portion (5) of the vehicle;
wherein an imaginary line (I) connecting at least one attachment point of the first linkage (19) and at least one attachment point of said second linkage (27) lies substantially parallel to an axis (X2) of rotation of the wheel (1) when in the straight ahead position.

18. A steering assembly according to claim 17, wherein the first (19) and second (27) linkages are of substantially equal length.

19. A steering assembly for a vehicle, the assembly comprising:
a hub (31) mechanically connected by means of a first linkage (19) to the steering mechanism (7, 21, 23) of the vehicle for changing the direction of a wheel (1) rotatably coupled to the hub (31); and
a member (25) pivotally coupled to the hub (31) so as to provide for changing the direction of the wheel (1), the member (25) being connected by means of a second linkage (27) to the main body portion (5) of the vehicle;
wherein the length of at least one of the first (19) and second (27) linkages is/are adjustable.

20. A steering assembly for a vehicle, the assembly comprising:
an inner hub (31) mechanically connected to the steering mechanism (7, 21, 23) of the vehicle;
a member (25) pivotally coupled to the inner hub (31) so as to provide for changing the direction of the wheel (1), the member (25) being connected to a main body portion (5) of the vehicle; and
an outer hub (29) mounted around said inner hub (31) for rotation relative thereto, the outer hub (29) being attached to or integral with a wheel (1) of the vehicle, and having an aperture (63) therein to allow adjustment of and/or access to the pivotal coupling between the inner hub (31) and the member (25).

21. A steering assembly according to claim 20, wherein the pivotal coupling between the inner hub (31) and the member (25) comprises taper roller bearing means (41, 43) secured between the inner hub (31) and the member (25).

22. A steering assembly according to claim 20 or 21, wherein the pivotal coupling between the inner hub (31) and the member (25) is located relative to the inner hub (31) by a pin (45, 47), the arrangement being such that removal or adjustment of the pivotal coupling is facilitated by the aperture (63) in the outer hub (29).

23. A steering assembly according to claim 22, wherein removal of the pin (45, 47) through the aperture (63) allows the member (25) to be withdrawn from the inner hub (31).

24. A motorcycle including a steering assembly according to any one of the preceding claims.
